# FASCICULE DE BREVET EUROPEEN

(11) **EP 0 897 355 B1**
(45) Date de publication et mention de la délivrance du brevet: **18.07.2001**
(21) Numéro de dépôt: 97921931.8
(22) Date de dépôt: 05.05.1997
(51) Int. Cl.: B60R 25/10, B60R 25/00, E04H 6/42, G07B 15/04

(54) **SYSTEME ET PROCEDE DE PROTECTION CONTRE LE VOL D'UN OBJET**
SYSTEM UND VORRICHTUNG GEGEN DIEBSTAHL EINES GEGENSTANDES
SYSTEM AND METHOD FOR PROTECTION AGAINST THEFT OF AN OBJECT

(30) Priorité: 06.05.1996 FR 9605631
(43) Date de publication de la demande: 24.02.1999
(73) Titulaire: AEROSPATIALE MATRA, 75016 Paris (FR)
(72) Inventeur: LOPEZ, Francis, F-33680 Le Porge (FR)
(74) Mandataire: Poulin, Gérard
(86) Numéro de dépôt international: FR9700791
(87) Numéro de publication internationale: WO9742064

(56) Documents cités:
- EP-A- 0 433 740
- WO-A-94/08820
- DE-C- 4 409 166
- GB-A- 2 273 596
- NL-A- 9 100 212
- US-A- 4 827 395
- US-A- 4 857 893

## Description

### Domaine technique

La présente invention concerne un système et un procédé de protection contre le vol d'un objet, et notamment contre le vol d'un véhicule sur un parking.

### Etat de la technique antérieure

Différents systèmes de l'art connu sont décrits dans les documents cités en fin de description. On va a présent analyser trois de ces documents décrivant des procédés proches du procédé de l'invention.

Le document, référencé [11] en fin de description, décrit un système de télépaiement qui utilise le principe d'identification par télé-interrogation d'un mini-boîtier électronique. Ce mini-boîtier renvoie un message spécifique à l'interrogation par une fréquence porteuse HF, émise par un moyen sol à la détection de passage d'un véhicule.

Ce système comprend une carte à puce télé-interrogeable à distance, placée sur le tableau de bord du véhicule pour autoriser le passage aux postes d'entrée et de sortie de parkings ou d'autoroutes.

Différents modules sont disponibles :
- un premier module comportant une pile, et interrogeable à 15 m environ ;
- un module standard ou à carte extractible, comportant une pile et interrogeable à 10 m environ ;
- un micromodule interrogeable à 15 cm, miniature et auto-alimenté par la porteuse VHF.

Un moyen sol est constitué de :
- un émetteur-récepteur HF pour interroger et acquérir le code des marqueurs véhicules de passage ;
- une unité de traitement pour noter le lieu, l'heure de passage et l'identification du véhicule ; ces données étant transmises à un organe central pour facturation automatique du péage ou du parking.

Si le véhicule ne répond pas à l'interrogation, une photographie du véhicule est prise et un traitement de l'image permet d'extraire automatiquement le numéro d'immatriculation.

Les domaines d'application de ce système sont :
- le télépéage d'autoroutes pour les abonnés ;
- le télépéage de parking pour les abonnés.

La combinaison de la fonction acquisition HF et de la prise automatique de photographie du véhicule rend l'ensemble du système difficile à leurrer. Les non-détections sont des pertes sèches pour la société exploitante. Les détections intempestives génèrent des traitements inutiles.

Le document, référencé [6], décrit un système qui consiste en une identification électronique (puce électronique télé-interrogeable intégrée sur une vignette) systématique et obligatoire de tous les véhicules. Cette identification, respectant les normes nationales et européennes, pourrait remplacer l'identification actuelle du numéro d'immatriculation par un numéro dit « V.I.N », les contrôles étant effectués par les forces de l'ordre.

Les objectifs de ce système sont de :
- réduire de façon significative le nombre de véhicules volés ;
- réduire les délais de récupération ;
- contrer la fraude due à la revente.

Ces objectifs seraient satisfaits par les fonctions suivantes :
- identification fiable des véhicules ;
- automatisation des contrôles ;
- utilisation des moyens informatiques fixes et mobiles de détection ;
- contrôle des véhicules avant revente.

Les composantes du système sont :
- le marquage électronique par une étiquette sécurisée à électronique télé-interrogeable, collée derrière le pare-brise, et visible de l'extérieur. cette étiquette comporte :
   - un témoin visuel de fonctionnement, l'année de première mise en circulation.
Elle comporte également les données suivantes cryptées électroniquement :
- le type du véhicule détecté,
- le numéro VIN ;

- le propriétaire est identifié, après arrêt du véhicule, par une contremarque sécurisée (carte à puce remplaçant la carte grise), comportant, en outre, en clair :
   - le genre,
   - la marque,
   - le numéro de série,
   - l'année de mise en circulation ;
- une panoplie de moyens de détection et de procédures liées à une base de données :
   - des moyens mobiles de détection (opérant dans les rues, routes, parkings, zones frontalières, etc...),
   - des moyens fixes (implantés dans les ports, péages, frontières, etc...),
   - des contrôles de vérification lors des reventes,
   - des moyens d'exploitation dans les postes de police et gendarmerie,
   - un fichier nation (fichier VIN : fichier national d'immatriculation des véhicules).

Le domaine d'application est celui de la totalité du parc de véhicules motorisés.

L'obligation légale de monter en permanence l'étiquette comportant un témoin de fonctionnement, et devant répondre à l'interrogation, rend le système d'immatriculation très difficile à leurrer car un véhicule « muet » est un véhicule suspect.

Le document, référencé [7], décrit un système qui utilise le principe de télé-interrogation de deux boîtiers électroniques cachés dans le véhicule et couplés entre eux. Des installations sol réparties à des points de passage importants permettent le marquage automatique « volé » au passage du véhicule déclaré volé et sa détection.

L'utilisation de deux boîtiers a pour objectif de faciliter la détection et de durcir le système au leurrage.

Ce système est un système de détection, d'identification et d'authentification de véhicules volés. Il est caractérisé par :
- un équipement du véhicule constitué :
   - d'une vignette visible sécurisée équipée d'une puce télé-interrogeable, communiquant avec une autre puce cachée dans le véhicule. La vignette électronique visible collée derrière le pare-brise contient des informations cryptées où des données peuvent être stockées. Elle s'active automatiquement par palpeur sismique et vérification du conducteur, ou sur demande du réseau extérieur ou de la puce cachée,
   - d'une puce électronique cachée dans le véhicule, qui est donc inaccessible, et qui contient un code d'identification non modifiable. La puce électronique est cachée dans le véhicule. Elle s'active sur demande des moyens sol ou de la vignette. Elle est passive avant ou après interrogation.

La vignette sécurisée et la puce électronique se vérifient mutuellement sur des fréquences différentes en passant par un point tiers. Si la vignette sécurisée est arrachée ou détériorée, la puce électronique est mise automatiquement en position volée. Si la puce électronique tombe en panne, les moyens sol sont automatiquement prévenus.
- un réseau de détection de passage des véhicules volés et de marquage « volé » des vignettes et des puces. Les moyens sols sont composés de :
   - stations de réseau de détection détectant le passage des véhicules volés ou marquant les vignettes du label « volé »,
   - filtreurs de trafic pour la localisation et l'identification de véhicules volés dans un flot de trafic,
   - détecteurs de poche pour les contrôles urbains de véhicules suspects,
   - lecteurs embarqués pour les contrôles urbains et routiers approfondis, et pour la localisation et l'identification de véhicules recherchés ;
- des moyens délivrant des informations de passage et des moyens mobiles et autonomes de détection et de reconnaissance des véhicules volés mis à la disposition des forces de l'ordre ;
- un fichier central comportant l'identité de tous les abonnés.

Les cibles de ce système sont les véhicules équipés du système et déclarés volés par leur propriétaire. Le lieu d'application de ce système est l'ensemble du réseau routier équipé de ce système.

Différentes tâches ne sont pas effectuées par ce système :
- L'infrastructure sol et le personnel d'utilisation et de maintenance dédiés à ce système représentent des charges financières très lourdes. En particulier, la récupération d'un véhicule volé, dont un seul point de passage est connu à une heure donnée, ne peut être prise en compte par le système.
- La localisation précise d'un véhicule est une tâche nécessitant un personnel nombreux.
- Outre la localisation, la récupération « manu-militari» du véhicule est une tâche délicate dont la délégation à une société privée pose un problème juridique non solutionné ; actuellement, cette tâche ne peut être effectuée que par les forces de l'ordre.

Ce système présente de nombreux inconvénients :
- le délai entre le vol et la mise à jour des moyens sol répartis sur l'ensemble du réseau routier. Ce délai est probablement supérieur au temps nécessaire à l'exportation frauduleuse du véhicule ;
- même détectée, l'immobilisation après localisation semble improbable sauf si le véhicule est abandonné, ce qui pose le problème de justification du système ;
- la vignette sécurisée, collée en évidence derrière le pare-brise, peut être détruite immédiatement après le vol ;
- la puce cachée, devant être captée par les antennes au sol, est obligatoirement fixée en dessous du véhicule. Elle ne peut être placée derrière une tôle car celle-ci ferait blindage ou cage de Faraday. Une fois le véhicule volé et isolé, la localisation du répondeur est une tâche relativement aisée dans un local. Sa destruction par un champ électrique important ou une tension d'arc élevée (s'il n'est pas localisé) ou mécanique (s'il est localisé) est aisée.

Le document référencé [12] comportant les caractéristiques du préambule des recendications 1 et 21, décrit un système de surveillance automatique d'une zone de parking de bicyclettes, permettant d'éviter par comparaison de codes qu'une personne autre qu'un possesseur enregistré n'emmène une bicyclette. Une bicyclette porte un transpondeur d'identification non déplaçable qui peut être reconnu par un capteur situé à la porte d'entrée/sortie de la zone de parking. Le cycliste porte un dispositif similaire qui a un code complémentaire à celui de sa bicyclette. Le cycliste pousse sa bicyclette à travers la porte lorsqu'il franchit un tourniquet. Si les deux identifications sont appariées, le tourniquet reste libre en rotation et un dispositif de blocage à la sortie de la porte est enlevé. Par contre, si le cycliste ne porte aucun transpondeur, ou porte un transpondeur qui ne s'apparie pas à celui de la bicyclette, il y a blocage de la porte et du tourniquet.

Le document référencé [13] décrit un système d'identification électromagnétique comprenant un émetteur pour générer, au moyen d'une antenne, un champ d'interrogation électromagnétique dans une zone de détection, au moins un répondeur passif capable de modifier ledit champ, et des moyens de détection d'une telle modification du champ au moyen d'une antenne. Ce répondeur comprend un circuit récepteur, qui en réponse à un champ d'interrogation, via des moyens redresseurs, fournit de l'énergie à des moyens de codage numérique actif comprenant des moyens de définition d'un code binaire unique pour le répondeur considéré ou pour un groupe auquel il appartient. Ces moyens de codage, grâce à des moyens de commutation, permettent de faire varier les caractéristiques électriques du circuit récepteur au rythme du code binaire pour générer un signal de code détectable par les moyens de détection.

L'objet de l'invention est de pallier les inconvénients des systèmes de l'art antérieur et de retenir toute personne en possession d'un objet qui ne lui appartient pas, par exemple de retenir une personne au volant d'un véhicule « emprunté » sur la surface d'un parking protégé.

### Exposé de l'invention

La présente invention concerne un système durci de protection contre le vol d'un objet ou d'un produit, et notamment contre le vol de véhicule lors de passages obligés dans des couloirs et sas tels que sortie de parking, entrée ou sortie d'autoroute.

La surveillance à un passage peut s'effectuer suivant deux régimes de fonctionnement (non compatibles entre eux) :
- le régime ouvert, qui est décrit à titre d'exemple dans la suite de la description, où la détection d'un vol présumé entraîne la fermeture d'une barrière en bout d'un couloir de passage. Normalement, la voie est toujours ouverte et ne se ferme qu'en cas de « vol présumé ». Ce type de fonctionnement nécessite une infrastructure plus importante pour les véhicules mais le système est transparent (sa présence et son fonctionnemen discrets renforcent sa dissuasion vis-à-vis des voleurs) ;
- le régime fermé, où la détection d'un vol empêche l'ouverture du passage. Normalement, la barrière est toujours fermée et ne s'ouvre que pour le passage d'un véhicule. Ce type de fonctionnement, associé à une barrière déjà motorisée (barrière double si le débit de passage est important), ne nécessite pratiquement aucune infrastructure supplémentaire, mais l'arrêt systématique des véhicules est obligatoire.

Le système de surveillance sélective d'objets à protéger contre le vol selon l'invention, situé dans une voie de passage, comprend :
- des moyens d'interrogation à distance de modules électroniques contenant respectivement un code « objet » d'identification d'un objet à protéger ; ou un code « personne » d'identification d'une personne en possession d'un objet à protéger ; ces moyens étant aptes à recevoir le code émis par chacun de ceux-ci ; ces moyens d'interrogation à distance comprenant un ensemble d'antennes créant un volume d'interrogation HF limité englobant la totalité de la voie de passage et aptes à recevoir la totalité des codes émis dans ce volume d'interrogation ;
- un module de contrôle relié auxdits moyens d'interrogation à distance, aptes à recevoir ces codes d'identification, et effectuant la recherche d'appairage entre les codes « objet » et « personne » reçus et sanctionnant la détection d'un code « objet » non accompagné du code « personne » appairé ;
caractérisé en ce que chaque module « objet » est caché dans un objet à protéger correspondant, au gré du propriétaire ; et en ce que chaque module électronique « objet » et « personne » est un marqueur HF contenant un code binaire crypté et variable, appairé par un traitement de décryptage de façon unique au moyen du module de contrôle, et émettant ce code lorsqu'il est soumis à un champ HF.

Avantageusement les moyens d'interrogation à distance sont situés dans une zone d'entrée d'un couloir de circulation unidirectionnelle du couple personne/objet.

Avantageusement des moyens de blocage, situés dans une zone dudit couloir de circulation unidirectionnelle située en aval de la zone d'entrée, permettent d'appréhender ladite personne en possession dudit objet et ne possédant pas le module propriétaire.

Avantageusement le système est transparent pour les objets non protégés et pour les couples vérifiés bons.

Avantageusement des moyens de signalisation permettent de visualiser le résultat de la comparaison des deux codes par l'opérateur de surveillance.

Avantageusement le système de l'invention comprend :
- un premier module électronique ou marqueur objet ;
- un second module électronique ou marqueur propriétaire ;
- au moins un poste de contrôle comportant :
   - au moins un premier module d'émission-réception relié à au moins une première antenne inférieure,
   - au moins un second module d'émission-réception relié à au moins une seconde antenne latérale située en hauteur,
   - au moins un module de commande relié à ces deux modules d'émission-réception,
   - des moyens de signalisation, reliés au module de commande,
   - un dispositif d'arrêt commandé par un module de contrôle en liaison avec le module de commande ;
- éventuellement un poste central de sécurité relié au(x) module(s) de commande du (des) poste(s) de contrôle, permettant le télécontrôle, pour le choix du mode de fonctionnement et la surveillance des états instantanés des sorties reliées.

Avantageusement le (ou les) module(s) de commande, le (ou les) premiers et le (ou les) second(s) module(s) d'émission-réception ainsi que la (ou les) antenne(s) latérale(s) sont disposés dans une (ou plusieurs) borne(s) située(s) d'un côté et/ou de l'autre d'une voie de circulation.

Avantageusement un marqueur comprend :
- une antenne et son plan de masse ;
- un circuit HF (détecteur avec ou sans amplification suivant décodage) ;
- un ASIC effectuant toutes les fonctions logiques de décodage, mémoire, programmation, séquentiel ;
- un quartz ;
- éventuellement un détecteur sismique (pour le marqueur véhicule) ;
- une pile.

Avantageusement la communication entre les marqueurs et les moyens HF est effectuée par code Manchester.

Avantageusement le système de l'invention comprend un circuit détecteur de brouillage précédé d'un filtre étroit centré sur la fréquence de la porteuse utilisée.

Avantageusement dans la version « parking en régime ouvert », et suivant le souhait de l'installateur, un moyen de signalisation peut indiquer le résultat instantané de l'unité de traitement : passage accepté, passage refusé, ou marqueur objet à vérifier.

Dans un exemple de réalisation particulièrement avantageux de l'invention l'objet est un véhicule et la voie de circulation est une voie de sortie d'un parking. Cette voie de sortie peut être coudée. Chaque voie de sortie comprend :
- une zone anti-fuite et ralentisseuse ;
- une zone d'interrogation HF ;
- une autre zone ralentisseuse ;
- une zone sanction.

Avantageusement le système de l'invention comprend un détecteur de présence/fuite de véhicule sur la zone d'interrogation

Avantageusement le système de l'invention comprend alors quatre antennes couvrant la zone de passage et garantissant la lecture des codes, deux antennes étant disposées de part et d'autre de la voie de circulation à environ deux mètres de hauteur, et orientées vers les vitres latérales du véhicule afin de faire pénétrer le rayonnement dans l'habitacle, les deux autres antennes étant situées verticalement au ras du sol afin de capter le message d'un capteur situé dessous le véhicule. Il comprend également des barrières d'isolement HF.

L'invention concerne également un procédé de surveillance sélective d'objets à protéger contre le vol, utilisé dans une voie de passage, caractérisé en ce que lors du passage d'un objet à protéger dans cette voie de passage, il comprend les étapes suivantes :
- création d'un volume d'interrogation HF limité englobant la totalité de la voie de passage ;
- réception d'au moins un code d'identification « objet » émis par au moins un marqueur objet ;
- vérification qu'un code d'identification « personne » émis par un marqueur « personne » est reçu pour chaque code « objet » reçu ;
- transparence si à la réception le (ou les) code(s) « objet » est (sont) validé(s) par un (ou des) code(s) « personne » respectivement appairés, sinon sanction de la détection d'un code « objet » non accompagné du code « personne » appairé ;
caractérisé en ce que chaque module « objet » est caché dans un objet à protéger correspondant au gré du propriétaire ; en ce que chaque module électronique « objet » et « personne », lorsque situé dans le volume d'interrogation HF, émet un code crypté variable ; en ce qu'un module de contrôle, après décryptage de chaque code reçu, vérifie que, correspondant à chaque code « objet », un code « personne » est aussi reçu dans un délai déterminé ; et en ce que l'absence d'un code « personne » correspondant à un code « objet » reçu déclenche la sanction à la fin du délai.

Dans une réalisation particulièrement avantageuse, ce procédé permet le blocage d'un véhicule dans une voie de sortie d'un parking. Dans cette réalisation :
- quand on ne reçoit plus un code véhicule non encore appairé, au bout d'un temps « délai véhicule », le refus de passage est émis ;
- quand on ne reçoit plus un code propriétaire non encore appairé, au bout d'un temps « délai conducteur », un message demandant la vérification du marqueur véhicule est émis.

Avantageusement on détecte la présence du véhicule sur la zone d'interrogation. On a alors les délais suivants :
- délai véhicule = présence du véhicule + 0,5 s ;
- délai conducteur = présence du véhicule + environ 1 s ;
- délai « nouveau véhicule» = présence du véhicule + environ 1,5 s.

Une technique de communication utilisée dans le système de l'invention est donc la télé-interrogation par fréquence HF de modules électroniques renvoyant un message binaire complexe. La mise en oeuvre du système de l'invention consiste alors à :
- identifier séparément par messages HF le véhicule et le conducteur ;
- traiter localement les messages acquis pour autoriser la sortie du véhicule du parking.

Ce fonctionnement est différent des autres systèmes de l'art antérieur qui dépendent d'une base de données dont le retard de mise à jour est un grave inconvénient.

Dans le cas d'une protection contre le vol d'un véhicule dans un parking, le système de l'invention assure à chaque sortie du parking :
- la réception du code véhicule vi, code d'identification d'un module inamovible caché dans le véhicule ;
- la réception du code propriétaire pj, code d'identification appairé d'un module en possession du responsable du véhicule, par exemple associé à la clé du véhicule ;
- le contrôle d'appairage des marqueurs acquis pour autoriser la sortie du véhicule :
   - dans le cas positif, la voie de sortie est libre,
   - dans le cas où le code véhicule est reçu mais l'appairage des deux codes n'est pas constaté, la sortie du véhicule est refusée : la récupération du véhicule sur la voie de sortie est alors possible.

Contrairement aux systèmes de l'art antérieur, cités précédemment, qui fonctionnent en contrôlant la présence de code(s) attaché(s) uniquement au véhicule, cette simple identification relevant d'un concept de gestion de trafic et non pas de résistance au vol. Le système de l'invention permet de mettre en oeuvre séparément :
- l'identification du véhicule ;
- l'identification du conducteur légal ;
- et la délivrance, au travers d'un moyen sol, d'une sanction immédiate.

Dans le cadre de l'invention, les conditions d'émission des messages des modules électroniques, les moyens d'acquisition des messages, le traitement de ces messages et les possibilités de choix de sanction de passage sont conçus pour une meilleure résistance aux méthodes de vol :
- les conditions d'émission des messages des modules électroniques sont sécurisées par :
   - la robustesse du moyen de transmission (difficilement brouillable),
   - la discrétion du module véhicule (détecteur sismique et/ou décodage de l'interrogation HF) ;
- l'utilisation de moyens d'acquisition puissants permet la dissimulation du marqueur véhicule ;
- le traitement des messages acquis déjoue les différentes configurations de leurrage (véhicule volé isolé et/ou aidé d'un véhicule complice) ou de simulation des modules électroniques par des matériels spécifiques (scanning des codes) ;
- le choix de la sanction est adaptable à la configuration du lieu.

Une technique de communication utilisée dans le système de l'invention est la télé-interrogation par fréquence HF des modules marqueurs HF. Chaque module accessible par le champ HF renvoie un message binaire crypté. La mise en oeuvre du système de l'invention consiste alors à :
- acquérir séparément par messages HF les caractéristiques du marqueur véhicule (si protégé), de son propriétaire, et éventuellement d'autres codes ;
- traiter localement la totalité des codes reçus pour autoriser la sortie du véhicule (ou ne pas bloquer celle-ci).

Ce fonctionnement est différent de celui des autres systèmes de l'art antérieur :
- qui dépendent principalement d'une base de données dont les délais/retards de mise à jour sont des inconvénients majeurs ;
- ou qui attendent l'arrivée de deux codes complémentaires pour valider le passage, sans tenir compte des autres codes reçus, dont l'un peut être le code vrai de l'objet à protéger et les deux autres des leurres. En plus de cette vulnérabilité de fonctionnement, de tels systèmes sont bloquants pour des objets non protégés ou pour des personnes ayant en leur possession un marqueur propriétaire d'un autre objet absent.

En opposition à ces deux principes de fonctionnement, le système de l'invention est totalement transparent aux objets non protégés et le système « en fonctionnement » ne se démasque que quand le vol présumé est détecté.

Dans le cadre de l'invention, les conditions d'émission des messages des modules marqueurs HF, le contenu des messages, les moyens d'acquisition des messages, le traitement de ces messages et les possibilités de choix de sanction de passage sont conçus pour une meilleure résistance aux méthodes de vol :
- les conditions d'émission des messages des modules sont sécurisés par :
   - la robustesse du moyen de transmission (difficilement brouillable),
   - la discrétion du module véhicule (pas d'émission propre, détecteur sismique et/ou décodage de l'interrogation HF pour conditionner la réponse),
   - l'utilisation de moyens d'acquisition puissants permettant la dissimulation du marqueur « véhicule/objet »,
   - le traitement des messages acquis déjoue les différentes configurations de leurrage (véhicule volé isolé et/ou aidé d'un véhicule complice) ou de simulation des modules électroniques par des matériels spécifiques (scanning des codes de réponses des modules),
   - le choix de la sanction est adaptable à la configuration du lieu.

Le système de l'invention peut être utilisé notamment pour la protection contre le vol :
- de véhicules dans le cas de :
   - surveillance de parking (régime ouvert),
   - surveillance de parking privé (régime fermé),
   - surveillance de garages d'immeubles (régime fermé),
   - surveillance aux niveaux des sas d'entrée ou de péages d'autoroute (régime ouvert) ;
- de conteneurs de transport (régime ouvert ou fermé) :
   - affectation à un camion et acquisition automatique des conteneurs transportés ;
- des bagages accompagnés en train, bateau, avion, camion :
   - seul la personne déposant le bagage à la gare de départ peut retirer celui-ci à la gare d'arrivée ;
- de produit en vrac (liquide ou poudre) :
   - le chargement n'est autorisé que si le camion et le chauffeur sont identifiés.

### Brève description des dessins

- Les figures 1 et 2 illustrent le système de l'invention ;
- la figure 3 illustre une variante de réalisation du système de l'invention ;
- la figure 4 illustre schématiquement un module électronique du système de l'invention ;
- les figures 5A et 5B sont un organigramme illustrant le fonctionnement du procédé de l'invention ;
- la figure 6 illustre une réalisation concrète du procédé de l'invention.

### Exposé détaillé de modes de réalisation

Dans la suite, pour simplifier la description, on considérera à titre d'exemple un système de protection contre le vol de véhicules sur un parking multi-sorties fonctionnant en régime ouvert.

L'invention comporte deux caractéristiques essentielles :
- les deux marquages séparés du véhicule et du conducteur responsable ;
- la reconnaissance d'appairage unique et immédiat de ces deux marquages.

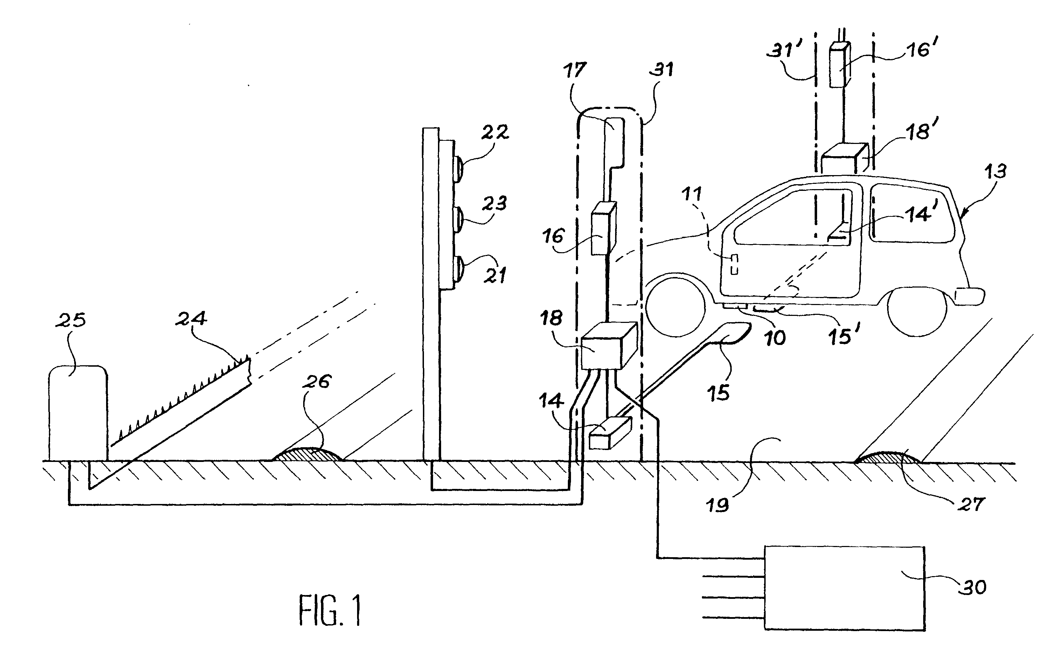

Comme représenté sur la figure 1, le système de l'invention comprend :
- un premier module électronique ou « marqueur » véhicule 10 ;
- un second module électronique ou « marqueur » propriétaire 11 ;
- au moins un poste de contrôle 12 de véhicule 13 comportant :
   - au moins un premier module d'émission-réception, ici deux : 14 et 14', relié à au moins une première antenne inférieure 15, 15' située dans le sol,
   - au moins un second module d'émission-réception, ici deux : 16 et 16', relié à au moins une seconde antenne latérale 17, 17' située en hauteur, par exemple à hauteur des fenêtres d'un véhicule,
   - au moins un module de commande, ici deux : 18 et 18', relié aux deux modules d'émission-réception 14 et 14', et 16 et 16,
   - des moyens de signalisation 20 comprenant par exemple un feu vert 21, un feu rouge 22, et un affichage d'un ou de plusieurs messages 23, reliés au module de commande,
   - un dispositif d'arrêt 24, par exemple une mini-herse extractible du sol qui permet de crever les pneus d'un véhicule, commandé par un module de contrôle 25 en liaison avec le module de commande ;
- éventuellement un poste central de sécurité 30 relié au(x) module(s) de commande de ce (ou ces) poste(s) de contrôle 10.

On entend par modules d'émission-réception des moyens d'interrogation HF, dimensionnés pour acquérir les codes de tous les marqueurs transitant par le chemin de passage protégé par ce système. Pour cela, les antennes sont disposées de manière à créer un volume d'interrogation sans zone morte, englobant la totalité du chemin de passage.

Un module de commande consiste en une unité de traitement 18 reliée auxdits moyens d'interrogation à distance (14,15 ; 14', 15' ; 16, 17 ; 16', 17'), décryptant les codes pour effectuer ensuite la recherche d'appairage entre les codes reçus. La détection d'un code « objet » non accompagné du code « propriétaire » appairé est sanctionnée immédiatement par le refus de passage, ou de blocage de délivrance du produit. Cette unité intelligente 18 reçoit en temps quasi-réel des émetteurs/récepteurs la totalité des codes acquis par les quatre antennes et effectuent le traitement de recherche d'appairage.

Avantageusement le code « propriétaire » peut être utilisé pour identifier la personne transitant ou retirant le produit.

Dans les grands parkings possédant plusieurs sorties, le poste central qui est une unité intelligente centrale (PC) reliée aux unités intelligentes de chaque système élémentaire, permet de flexibiliser leur fonctionnement en maintenance ou en heures de pointe.

Sur la figure 1 sont également représentés deux ralentisseurs 26 et 27.

Dans un poste de contrôle 12 le module de commande 18, le premier et le second module d'émission-réception 14 et 16 ainsi que la (ou les) antenne(s) latérale(s) 17 peuvent être disposés dans une borne 31.

Comme représenté sur la figure 1, une seconde borne 31', contenant les mêmes éléments que la borne 31 à, savoir des modules 14', 16', des antennes 17', un module de commande 18', peut être disposée de l'autre côté de la voie de circulation 19.

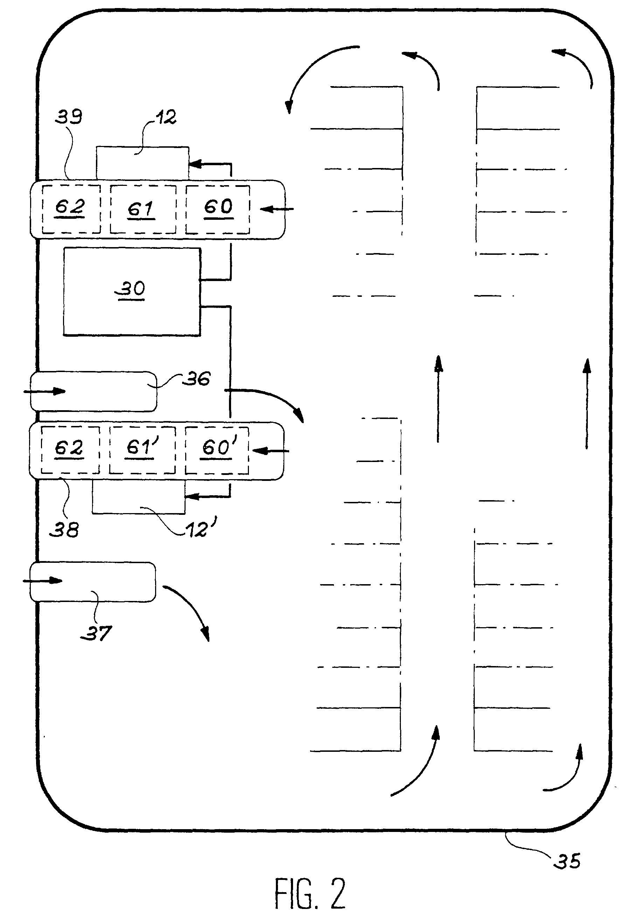

Sur la figure 2 est représenté le principe d'aménagement d'un parking muni d'une enceinte 35, de deux voies d'entrée de véhicule 36 et 37, et de deux voies de sortie de véhicules 38 et 39.

On retrouve sur cette figure le poste central de sécurité 30 relié à deux postes de contrôle 12 et 12'.

Sur chaque voie de sortie sont schématisées en pointillés :
- une zone ralentisseur (60, 60') ;
- une zone interrogation HF (61, 61') ;
- une zone sanction (62, 62')comprenant une zone de freinage par exemple formée d'un double coudage du couloir de sortie.

La surface globale du parking est ceinturée par une clôture. Les voies d'entrée sont libres mais unidirectionnelles et les sorties sont des portions de voies de quelques dizaines de mètres, comportant en début un exemplaire de la composante sol du système et en fin de voie, un organe de sanction (d'obturation).

L'organe de sanction est supposé être une obturation de voie, mais le signal d'arrêt peut être traduit, au choix du client, par un autre type de sanction tel que « ordre envoyé au véhicule » ou à l'extérieur du parking.
En l'absence de sanction « sortie refusée », la voie de sortie est libre.

Chaque système élémentaire est ainsi composé de plusieurs ensembles :
- un ensemble HF regroupant les différents sous-ensembles :
   - d'émission et de réception,
   - de traitement logique,
   - de gestion ;
- un ensemble de sanction : le signal de l'invention délivre un signal sanctionnant le passage du véhicule. ; cette sanction, laissée au choix du client du contrat, peut être traitée de plusieurs façons, et notamment :
   - par fermeture de la voie de sortie,
   - par envoi d'un signal radio vers un module d'arrêt interne au véhicule,
   - par envoi d'un signal d'alerte vers une autorité compétente.

La fonction acquisition des données consiste à acquérir les identifications des deux éléments du couple véhicule d'une part et conducteur de l'autre.

Le traitement des identifications est insensible :
- aux configurations/comportements divers de la clientèle ;
- à des suites de véhicules circulant à des vitesses variables de l'arrêt complet à 40 km/h maximum ;
- aux méthodes de leurrage disponibles.

Selon l'invention le marquage du véhicule est effectué par le marqueur véhicule 10 émettant un code binaire vi, par exemple lorsqu'il est soumis à un champ HF adapté. Il est caché dans le véhicule à protéger dans un lieu choisi par le propriétaire.

Le marquage du conducteur légal s'effectue par le marqueur propriétaire 11 émettant un code binaire pj, par exemple lorsqu'il est soumis à un champ HF adapté. Ce marqueur 11 est supposé situé dans l'habitacle du véhicule 13, par exemple accroché à la clé de contact, ou sur le tableau de bord.

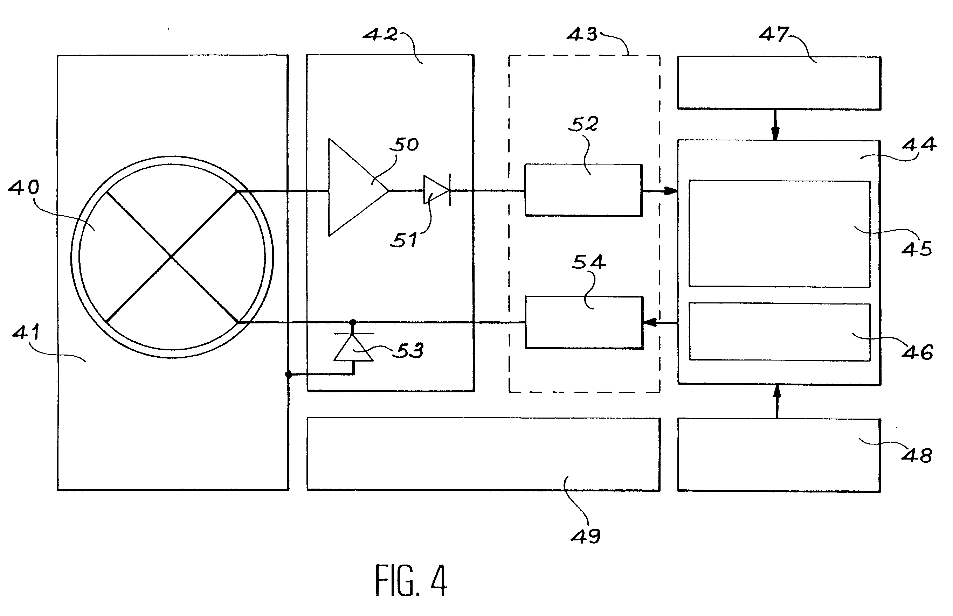

Le schéma fonctionnel d'un marqueur est donné sur la figure 4.

Il comprend notamment :
- une antenne 40 et son plan de masse 41 adaptée à la fréquence d'interrogation utilisée ;
- éventuellement (suivant le type d'utilisation du module marqueur) un détecteur sismique 48 ;
- éventuellement (validé par programmation), un circuit HF 42 de détection d'interrogation et de codage de l'interrogation validant la réponse du module marqueur ;
- un processeur de communication 43 ;
- un circuit ASIC 44 regroupant la totalité des fonctions logiques de détection, de décodage, de cryptage, séquentielles, et de codage (NRZ à code Manchester), et permettant la programmation et la validation des fonctions sélectionnables ;
- un modulateur d'impédance d'antenne ;
- une pile d'alimentation 49 ;
- un quartz 47.

Le circuit HF 42 comprend éventuellement un amplificateur 50, un détecteur 51, ainsi qu'une diode 52. Le processeur de communication comprend un démodulateur BiPh/NRZ 53 et un modulateur NRZ/BiPh 54.

L'antenne 40 est relié d'une part à l'amplificateur 50 suivi du détecteur 51, suivi du démodulateur 52 relié au circuit ASIC 44. Il est relié d'autre part à une première borne de la diode 53 dont 'l'autre borne est reliée au plan de masse 41. Cette première borne est reliée au modulateur 54, lui-même relié au circuit ASIC 44.

Les deux codes vi et pj correspondants aux marqueurs 10 et 11 sont complexifiés afin d'empêcher le leurrage du système (ou simulation du module conducteur). Les messages émis par ces marqueurs comportent des parties de message tournantes, et/ou changeantes et/ou cryptées, le tout respectant une loi d'appairage variant en fonction des marqueurs et du système sol utilisés.

L'interrogation de ces marqueurs 10 et 11 peut être assurée par un ensemble d'antennes (15, 15', 17, 17') créant un volume d'interrogation HF englobant la totalité du véhicule empruntant la sortie.

L'acquisition est sécurisée par la construction d'une zone d'interrogation constituée par exemple de :
- quatre antennes 15, 15', 17 et 17' couvrant la zone de passage et garantissant la lecture des codes. Deux antennes 17 et 17' sont disposées de part et d'autre de la voie de circulation 19, à environ deux mètres de hauteur. Ces antennes 17 et 17' sont orientées vers les vitres latérales du véhicule afin de faire pénétrer au mieux le rayonnement dans l'habitacle. Les deux autres antennes 15 et 15' sont situées verticalement au ras du sol afin de capter le message d'un capteur situé dessous le véhicule, sans être perturbées par la présence éventuelle de flaques d'eau bloquant le passage du champ HF ;
- de barrières d'isolement HF empêchant le rayonnement HF vers l'extérieur de cette zone, afin de ne pas acquérir d'autres réponses (véhicules circulant sur le parking ou sur la voie de dégagement).

La disposition des antennes agit sur deux fonctions :
- la capacité à acquérir les messages des modules cachés dans (sous) le véhicule, et celui du conducteur légal ;
- le bornage du champ d'acquisition (pour ne pas acquérir de messages de marqueurs situés dans des véhicules circulant en dehors du couloir à surveiller).

Selon l'invention le propriétaire dissimule le marqueur véhicule 10 dans celui-ci par exemple :
- dans tout emplacement original, laissé à l'initiative du propriétaire, mais qui permet l'émission/réception HF (pare-chocs, tableau de bord, siège, dessous de châssis, rebord de carrosserie, ..), ce qui rend le difficilement repérable ;
- de façon définitive compte-tenu de sa longue durée de vie de cinq à dix ans (fixation par collage, mousse injectée, plaque de fibre de verre...).

De ce fait la localisation/destruction devient une tâche très longue, même pour un voleur professionnel, d'autant que le système n'émet pas à l'arrêt (grâce à un détecteur sismique qui conditionne son activité).

Ce marqueur 10, détecté seul, conduit impérativement à l'immobilisation du véhicule.

Le conducteur légal (mandataire) doit toujours être en possession du marqueur propriétaire 11, qui seul permet le passage du véhicule porteur du marqueur véhicule appairé (ce marqueur propriétaire 11 ne doit jamais être laissé dans le véhicule (de même que sa clé) car sa présence supprime la protection).

La seule contrainte relative au marqueur propriétaire est qu'il ne soit pas être enfermé dans une enceinte métallique (exemple coffre du véhicule).

Les places recommandées sont :
- accrochée aux clés du véhicule ;
- dans une poche ou dans un sac dans l'habitacle.

La perte ou la panne d'un des deux marqueurs 10 et 11 entraîne obligatoirement le remplacement du couple de marqueurs 10 et 11.

L'autorisation de sortie est délivrée immédiatement par un logiciel de traitement effectuant les calculs de recherche d'appairage des codes reçus, les véhicules non équipés n'étant pas traités par le système.

Le traitement des codes est illustré sur le tableau I donné en fin de description. Dans ce tableau le signal vert correspond à une autorisation de passage ; le signal rouge correspond à module conducteur absent. Un message lumineux, non associé aux feux de sanction, est affiché lorsque le système détecte la présence d'un marqueur propriétaire isolé : il est en effet souhaitable d'adresser au conducteur une indication signalant l'absence du marqueur véhicule 10 (cas de panne de celui-ci, ou présence connue ou inconnue d'un autre marqueur propriétaire 11).

La sanction négative du traitement est effectuée suivant la demande du client opérateur. L'arrêt du véhicule peut être le besoin exprimé. ce besoin fondamental est décliné en besoins secondaires par :
- la construction de couloirs limitant la vitesse maximum du véhicule, facilitant ainsi l'acquisition de données et offrant plus de temps de réaction aux conducteurs étourdis, l'existence de longs couloirs rendant difficile l'échappement par les entrées à contresens ou la sortie (pour une fuite dans le parking) en marche arrière ;
- des feux de signalisation traduisent visuellement la sanction du traitement ;
- un dispositif de blocage de type barrière d'arrêt.

Dans le cas où le système regroupe plusieurs systèmes élémentaires 12, 12', comme représenté sur la figure 2, répartis sur des zones éloignées (cas d'un grand parking), un site central doit regrouper un ensemble de contrôle/commande 30. Cet ensemble de contrôle/commande 30 doit être proche d'un système centralisé de surveillance par caméras.

Le système offre plusieurs modes opératoires différents :
- le mode hors tension (non décrit car évident) ;
- le mode « inerte » (état suite à une mise sous tension ou à une alerte) ;
- le mode « nominal » effectuant la protection contre le vol ;
- le mode « simulation » pour les périodes de grandes affluence, où une fermeture de voie serait économiquement très gênante ;
- le mode « maintenance » permettant les réparations ou les vérifications périodiques.

Ces modes sont utilisables séparément sur chaque système élémentaire (sortie équipée).

Des commandes discrètes permettent des modifications de configuration des sorties :
- la commande « fermeture » de la barrière ;
- la commande « ouverture » de la barrière.

Dans une variante du procédé de l'invention il est possible d'envisager une suppression de la protection. En effet, dans certains cas (nouveau propriétaire, protection inutile, nouveau véhicule, etc...) un propriétaire légal peut vouloir localiser le module véhicule trop bien caché afin de le récupérer ou l'inhiber.

Ce cas peut être laissé à la charge du propriétaire où un service peut être fourni.

L'outillage consiste principalement en un émetteur/récepteur de puissance réduite et un réglable permettant de localiser précisément le module.

Une synthèse des cas possibles de fonctionnement est donnée dans le tableau III.

La logique de traitement satisfait aux exigences définies dans le tableau I situé en fin de description, et peut résister aux tentatives de leurrage.

Le leurrage peut être classé en cinq types :
- localisation ;
- saturation ;
- ruse ;
- casse ;
- forçage.

Dans le tableau II sont données les solutions proposées par le système de l'invention à chacun de ces types de leurrage.

La logique de traitement est réalisée par un logiciel composé d'algorithmes traitants indépendamment chaque point suivant :
- la sanction d'un véhicule protégé, non accompagné du module légal correspondant ;
- le décryptage des codes ;
- le masquage du module répondeur d'un véhicule volé par un véhicule complice équipé suivant de très près celui-ci ;
- les réponses permanentes de modules provenant de véhicules arrêtés ;
- la surveillance de non-éblouissement/masquage HF de l'interrogation ;
- le contrôle d'appairage ;
- la logique de sanction d'affichage.

La validité du système de l'invention repose sur la qualité de transmission des codes véhicule et conducteur.

Si un niveau anormal de puissance est constaté, ou si un brouillage de l'interrogation est constaté, le système déclenche un refus de passage. Le circuit détecteur de brouillage peut être précédé d'un filtre étroit centré sur la fréquence de la porteuse.

La logique de traitement est basée sur deux principes :
- quand le système ne reçoit plus un code vi non encore appairé, au bout d'un temps « délai véhicule », le refus de passage est émis ;
- quand le système ne reçoit plus un code pi non encore appairé, au bout d'un temps « délai conducteur », un message demandant la vérification du code véhicule est émis.

Additionnellement à ces deux principes, si aucun code n'est reçu durant un temps « nouveau véhicule », les piles de codes sont remises à zéro.

Ces deux temporisations (délais « véhicule » et « conducteur ») doivent varier d'environ 0,7 s pour des véhicules rapides à l'infini pour des véhicules s'arrêtant sur la zone d'interrogation. La temporisation « nouveau véhicule » doit être supérieure en valeur aux deux autres temporisations.

Ces temporisations sont des délais pendant lesquels le véhicule se déplace (par exemple de 11 m/s à 40 km/h). La distance correspondante parcourable durant ces délais, additionnellement au délai de réaction nécessaire à un conducteur, dimensionnent la longueur minimum du sas avant arrêt : ces délais doivent donc être adaptés à la vitesse du véhicule pour ne pas laisser un délai important à un véhicule (volé) rapide.

Cette variation peut donc être pilotée par des capteurs de présence/fuite de véhicule sur la zone d'interrogation (détecteur à boucle magnétique). A cette détection de présence, doit être ajoutée une valeur ajustable telle que :
- délai véhicule = présence du véhicule + 0,5 s (critique) ;
- délai conducteur = présence du véhicule + 1 s (non critique) ;
- délai « nouveau véhicule» = présence du véhicule + 1,5 s (non critique).

Ces valeurs influent directement sur la quantité de codes à traiter simultanément et sur la longueur du sas.

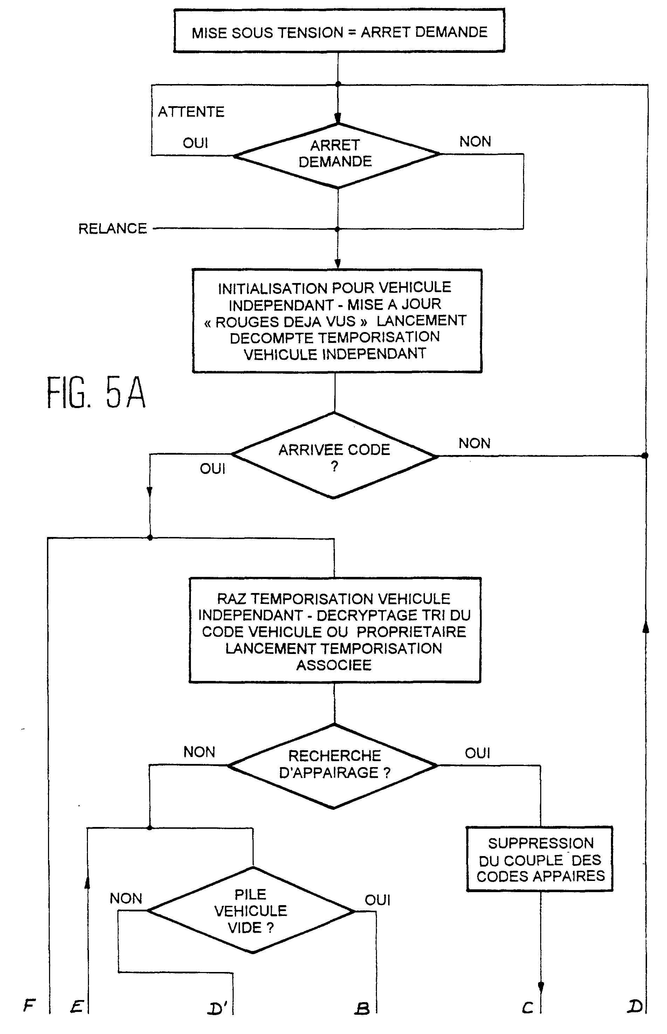

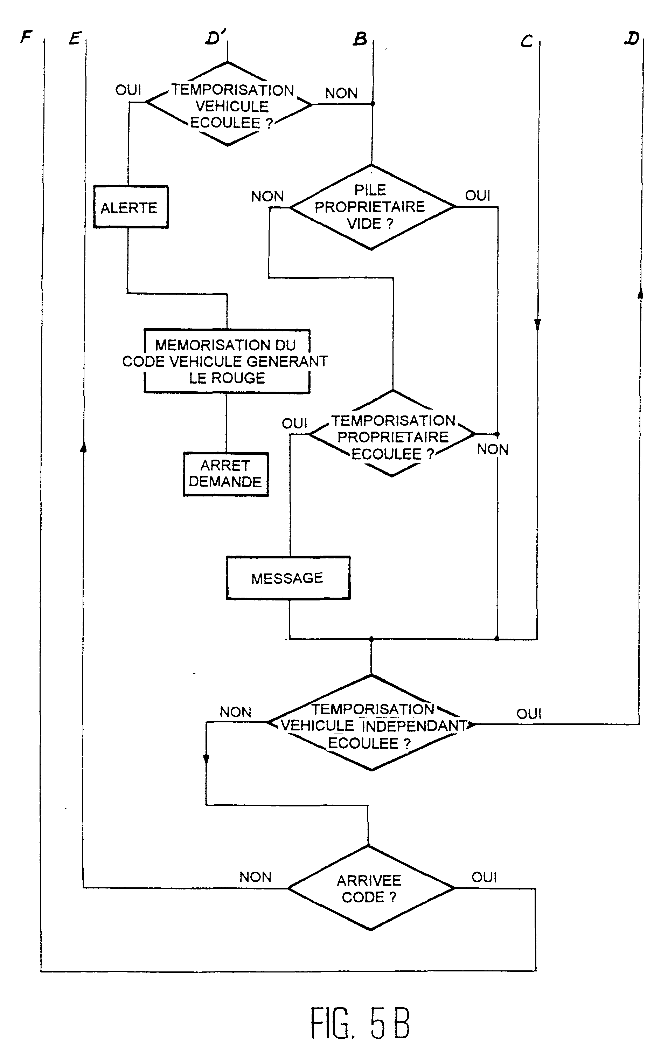

Un organigramme illustrant le fonctionnement du procédé de l'invention est donné sur les figures 5A et 5B.

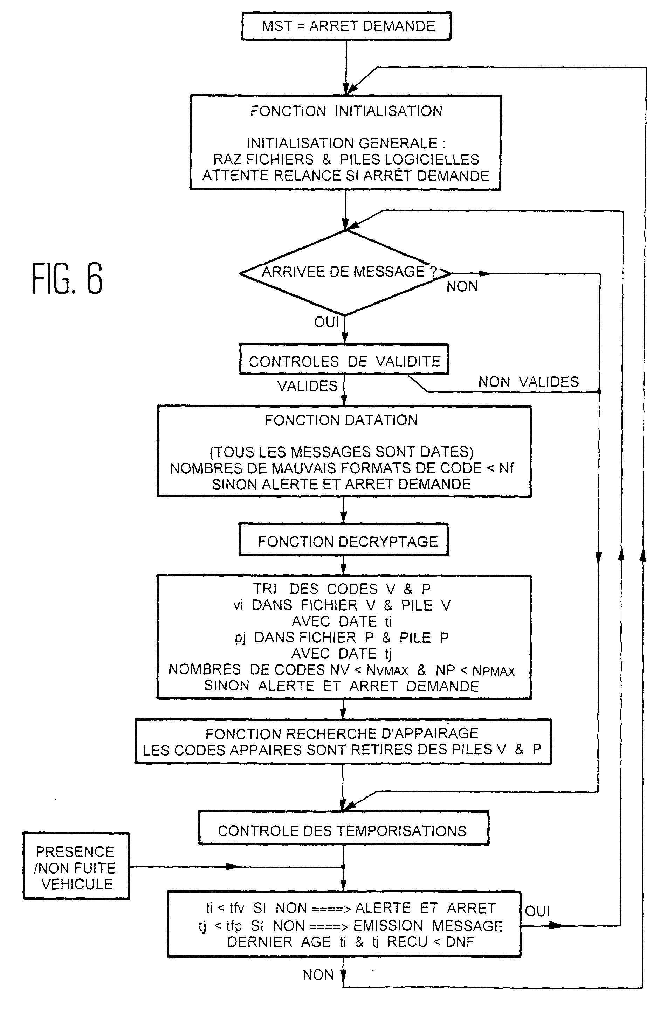

Un exemple de réalisation concrète d'un logiciel de traitement est illustré sur la figure 6.

On va à présent considérer différentes potentialités de fausses alertes à l'utilisation, qui sont prises en compte dans le système de l'invention.

### • Marqueur véhicule mal installé

La protection du véhicule est basée sur l'acquisition du marqueur véhicule 10. Si celui-ci n'est pas acquis par les antennes, le véhicule est considéré comme non équipé et son passage est libre.

L'installation de ce marqueur 10 peut être qualifiée par le passage dans un sas qui donne le compte rendu d'installation :
- si le message « vérification » s'allume, cela signifie que ce marqueur 10 n'a pas été acquis, soit installation à reprendre (ou marqueur en panne) ;
- si le message « vérification » ne s'allume pas, cela signifie que l'installation est correcte.

### • Non-acquisition du marqueur propriétaire

La délivrance de l'autorisation de passage d'un véhicule détecté « protégé » conduit par le détenteur légal repose sur la capacité d'acquisition sûre du module propriétaire 11.

Si ce marqueur propriétaire 11 n'est pas acquis par le système, celui-ci considère que le véhicule est emprunté et refuse le passage.

Afin de ne pas émettre une alerte injustifiée (dont un taux élevé discréditerait le système), le système doit offrir la capacité d'acquisition sûre du marqueur propriétaire 11.

### • Acquisitions parasites de marqueurs externes

Le système de l'invention fonctionne en aveugle : si un marqueur véhicule 10 est acquis, le message propriétaire correspondant doit aussi être acquis dans le délais « temporisation véhicule ». Si un code vi isolé provenant d'un véhicule circulant à proximité est acquis, cela génère automatiquement une alerte après le délai.

Il est donc indispensable d'isoler la zone d'acquisition de l'extérieur par :
- des orientations d'antennes limitant les acquisitions étrangères ;
- des écrans HF (grillages électriquement conducteurs) ;
- une distance minimum des zones de circulation externes et internes.

### • Acquisitions intermittentes

Les mécanismes de traitement logiciel des codes reçus distinguent facilement les différentes configurations multimarqueurs quand les véhicules circulent à des vitesses supérieures à 5 km/h, même si ceux-ci se suivent de près.

Dans le cas de circulation bouchonnante, avec arrêt de plusieurs secondes pour chaque véhicule (sortie du couloir sur la voie de circulation véhicule par véhicule), une configuration marqueur véhicule situé à l'extrême avant d'un véhicule précédé par un véhicule utilitaire de hauteur importante peut générer une fausse alerte : le marqueur véhicule approchant est détecté puis masqué par l'arrière du véhicule précédent. Ce marqueur est alors considéré comme étant en fuite par le système qui émet l'alerte.

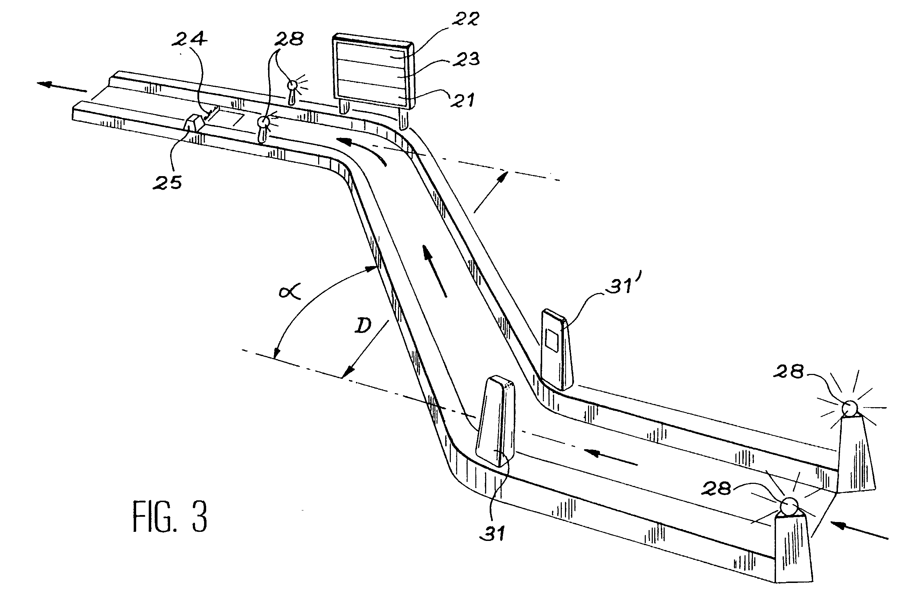

Ce cas de figure, ne pouvant être solutionné par logiciel, peut être pris en compte par le coudage du couloir de circulation, comme illustré sur la figure 3, lié à une hauteur minimum d'antenne. La distance D entre les deux médianes peut être de douze mètres environ, l'angle α peut être de 60° environ. Des feux clignotants 28 sont également représentés sur cette figure.

### • Saturation malveillante des récepteurs

Les acquisitions utilisent la transmission HF. Si cette méthode de transmission est perturbée, le véhicule est traité comme non équipé, c'est-à-dire que le passage du véhicule est autorisé.

Bien que le procédé de communication soit robuste, le système surveille le champ HF et déclenche une alerte si un niveau HF anormal est détecté.

### • Fausses alertes générées par l'utilisateur

### Durée de vie limitée des modules conducteurs

La non-détection du marqueur véhicule 10 due à l'usure de la pile entraîne la perte de la protection. Cette panne est signalée par le message « vérification ».

La non-détection du marqueur propriétaire 11 due à l'usure de la pile supprime la fonction « laisser-passer » : le système considère alors que le marqueur propriétaire est absent et par conséquent, déclenche une fausse alerte.

Un système fixe simplifié, disponible à l'intérieur du parking et émettant à puissance réduite, peut prévenir une baisse de la performance d'émission du marqueur propriétaire 11.

Il est donc nécessaire de remplacer la pile du marqueur propriétaire 11 régulièrement.

### Inattention du conducteur légal

### * Oubli du marqueur propriétaire 11.

Le principe de fonctionnement du système de l'invention fait que l'oubli de présence du marqueur 11 est traduit par la détection « véhicule présumé volé » lors de son passage à travers le système.

Il est donc utile de prévoir une procédure de vérification rapide permettant de remettre rapidement en service la voie de sortie.

### * Marqueur propriétaire 11 inaccessible à l'acquisition.

L'autorisation de passage du véhicule est donné par la détection du marqueur propriétaire 11. Si ce marqueur 11 n'est pas acquis par l'un des récepteurs car masqué par un écran, le véhicule est considéré comme ayant été volé. Il en sera ainsi quand le marqueur propriétaire 11 a été laissé dans le coffre (métallique) du véhicule. La sortie du coffre de ce marqueur 11 par le conducteur étourdi ne pouvant ré-autoriser automatiquement le passage (le logiciel se bloquant en mode inerte), une procédure de vérification est nécessaire avant l'ordre de relance.

Dans un exemple de réalisation le système de l'invention comprend trois composantes matérielles :
- des composantes véhicule (plusieurs marqueurs véhicule) ;
- des composantes propriétaire (plusieurs marqueurs propriétaires). Ces marqueurs ont des codes respectivement appairés avec les composantes véhicule suscitées ;
- une composante sol située en début de chaque couloir de sortie. Cette composante interroge les marqueurs véhicule et propriétaire pour acquérir leurs codes propres et sanctionner le résultat suivant une logique déterminée.

Cette composante sol est constituée de :
- un émetteur/récepteur mono-antenne ;
- un micro-ordinateur supportant le logiciel de traitement et délivrant une sanction visuelle (VERT, ROUGE et message « vérification ») et sonore pour le rouge.

La réalisation de marqueurs durcis n'est pas nécessaire à la mise en oeuvre du procédé de l'invention. La suppression du durcissement permet alors l'utilisation immédiate de marqueurs de type grand public (par exemple badges hyper-X de Thomson-CSF), dont les codes sont programmés en codes fixes respectant la loi d'appairage. A cette disponibilité immédiate des marqueurs, correspond une simplification du logiciel de traitement :
- l'utilisation de marqueurs non discrets simplifie le module logiciel du décodage d'interrogation ;
- l'utilisation de marqueurs non cryptés simplifie le module logiciel de décryptage.

L'utilisation de tels marqueurs permet de même l'utilisation du couple sol « émetteur/récepteur » correspondant.

Dans cet exemple de réalisation on utilise un émetteur/récepteur + démodulateur et des modules associés Thomson, mais ces circuits auraient pu être réalisés avec des ensembles Alcatel, Texas, Micro-Design ou autres.

Les modules Hyper-X Thomson émettent un message constitué de :
- 12 octets fabricants (seuls les modules vendus avec cet émetteur sont acquis par cet émetteur) ;
- N octets utilisateur (par exemple quatre caractères ASCII)
   - de AA00 à AA90 pour les marqueurs véhicules (codes pairs),
   - de AA01 à AA91 pour les marqueurs propriétaires respectivement appairés suivants (codes impairs) :
      AA00 avec AA01,
      . . . . . . . . . . . . . . .
      AA20 avec AA21,
      . . . . . . . . . . . . . . .
      AA90 avec AA91.

Le module logiciel de décryptage est transparent.

Le module logiciel d'appairage consiste à rechercher, pour le code véhicule reçu, le code d'identification impair suivant.

Les marqueurs véhicules et conducteurs réels peuvent avoir des codes très fortement complexifiés pour rendre impossible la simulation du code conducteur d'un véhicule volé. De même, la fréquence utilisée (donc les émetteurs/récepteurs) peut être différente pour le système de protection réel. Elle dépend des plages de fréquences autorisées pour une telle utilisation.

### REFERENCES

[1] FR-2 413 723
[2] FR-2 460 813
[3] FR-2 608 984
[4] FR-2 619 065
[5] FR-2 629 775
[6] FR-2 691 813 (DETVOL de THOMSON)
[7] FR-2 712 105 (VOLBACK de INMED)
[8] FR-2 716 317 (DETWOL bis de THOMSON)
[9] FR-2 716 850
[10]FR-2 719 146
[11]Documentation « The Q-FREE System » de MICRO DESIGN AS (1994)
[12]NL-A-9 100 212
[13]NL-A-8 601 021

**TABLEAU I**

| Codes véhicule reçus | Codes propriétaire reçus | Commande signal |
|---|---|---|
| Véhicule non équipé | Conducteur sans marqueur | VERT |
| Véhicule non équipé ou marqueur véhicule en panne | Conducteur avec marqueur | VERT & message lumineux |
| Véhicule équipé | Conducteur avec marqueur correspondant ou conducteur avec marqueur correspondant et des couples marqueurs véhicules + conducteurs | VERT |
| | Conducteur avec marqueur correspondant & passager avec marqueur(s) conducteur(s) & véhicule apairé | |
| | Conducteur sans marqueur ou conducteur sans marqueur correspondant (au véhicule) mais avec autre couple de marqueurs conducteur & véhicule | ROUGE |

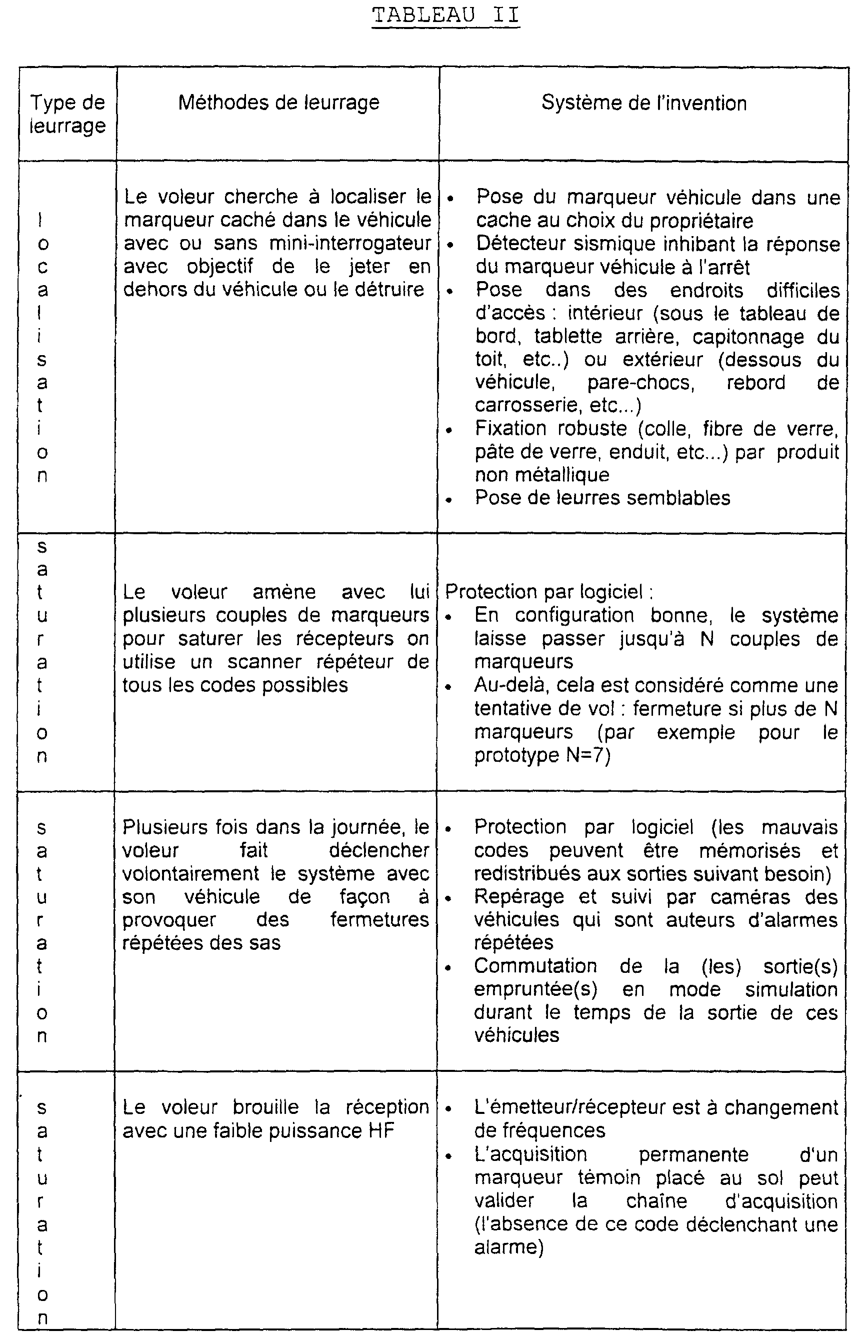

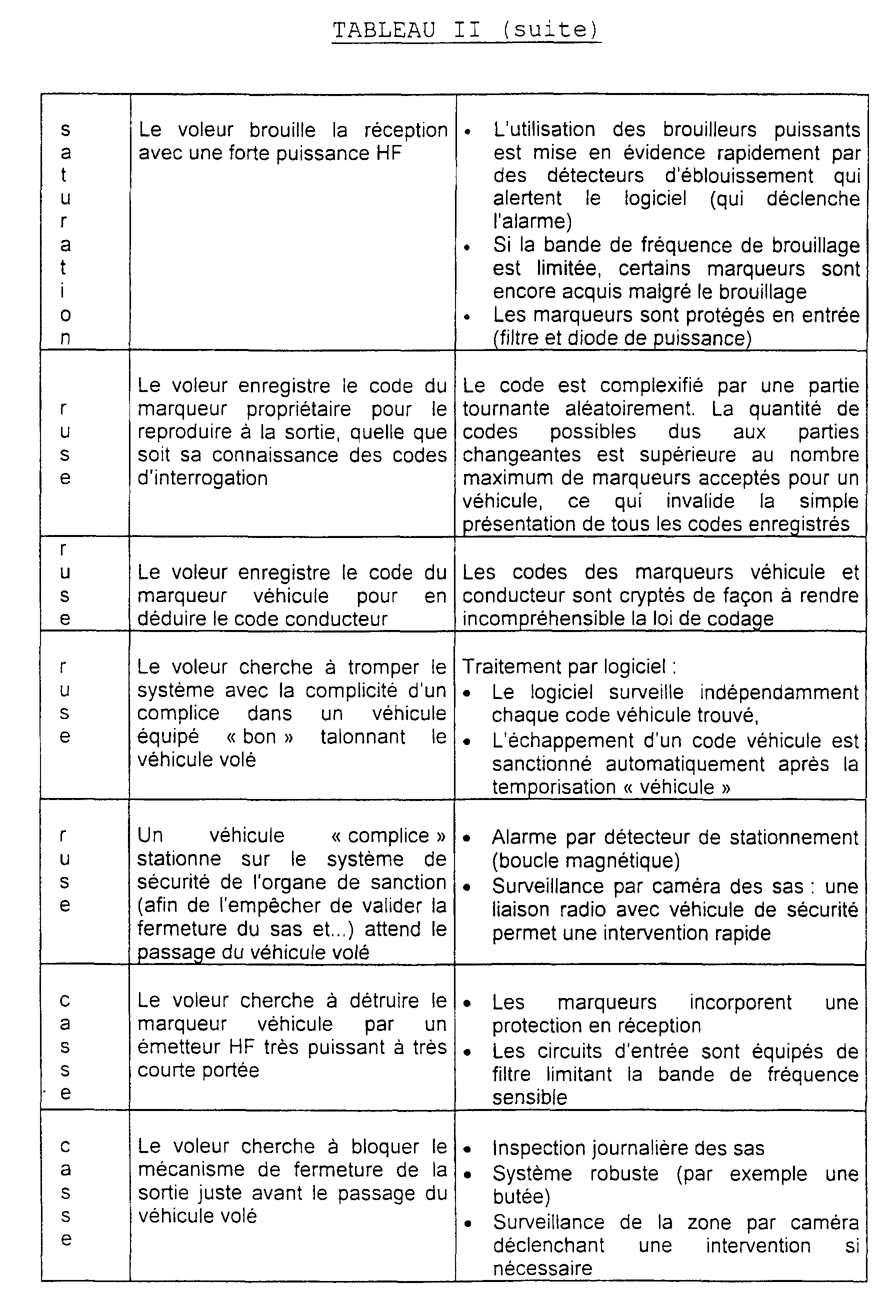

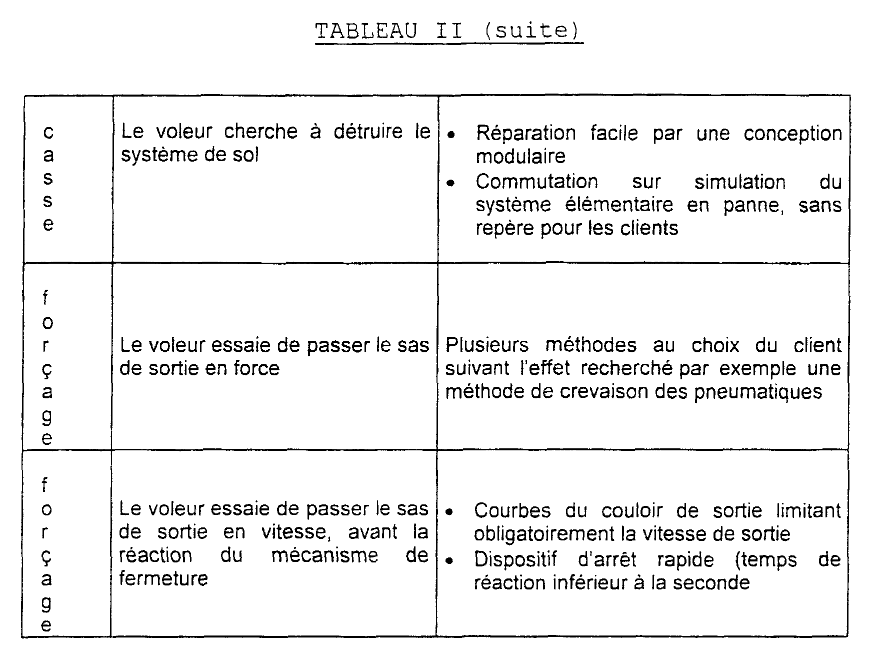

**TABLEAU III**

| Cas rencontrés à l'utilisation | Méthodes |
|---|---|
| Utilisation courante | II est possible de lier le marqueur conducteur à la clé de contact du véhicule afin de lier physiquement l'identification du responsable légal à la possession |
| Découverte de l'oubli du marqueur conducteur quand le client est sur le parking | Une sortie additionnelle basée sur un ensemble ralentisseur + barrière + guichet gardé peut permettre au conducteur qui le désire de sortir du parking en justifiant sa propriété |
| L'utilisateur veut équiper un troisième jeu de clés du véhicule | Une mini-série de kits de plusieurs marqueurs peut être initialisée |
| Cas de perte d'un marqueur (véhicule ou conducteur) | Le kit complet doit être remplacé |
| Inhibition commandée de la protection | Cela est possible par une conception permettant de changer la pile du marqueur véhicule : le retrait de la pile rendant inerte le marqueur. Mais : |
| | • Cela augmente son encombrement et fragilise la résistance du marqueur aux conditions d'ambiance |
| | • L'accès au marqueur doit être conservé (cela fragilise la protection car le caches possibles sont plus réduites) |
| L'utilisateur veut supprimer la protection | Le marqueur véhicule doit être localisé pour destruction : |
| | • Soit par une recherche classique |
| | • Si celle-ci est infructueuse, une installation mono-antenne de faible puissance doit être employée pour localiser la zone d'installation |

## Revendications

1. Système de surveillance sélective d'objets à protéger contre le vol, ledit système étant situé dans une voie de passage et comprenant :
- des moyens d'interrogation à distance de modules électroniques (10, 11) contenant respectivement un code « objet » d'identification (vi) d'un objet à protéger (13) ; ou un code « personne » d'identification (pi) d'une personne en possession d'un objet à protéger ; ces moyens étant aptes à recevoir le code émis par chacun de ceux-ci ; ces moyens d'interrogation à distance comprenant un ensemble d'antennes (15, 15', 17, 17') créant un volume d'interrogation HF limité englobant la totalité de la voie de passage et aptes à recevoir la totalité des codes émis dans ce volume d'interrogation ;
- un module de contrôle (18) relié auxdits moyens d'interrogation à distance (14, 15 ; 14', 15' ; 16, 17 ; 16', 17'), aptes à recevoir ces codes d'identification, et effectuant la recherche d'appairage entre les codes « objet » et « personne » reçus et sanctionnant la détection d'un code « objet » non accompagné du code « personne » appairé ;
caractérisé en ce que chaque module « objet » est caché dans un objet à protéger correspondant, au gré du propriétaire ; et en ce que chaque module électronique « objet » et « personne » est un marqueur HF contenant un code binaire crypté et variable, appairé par un traitement de décryptage de façon unique au moyen du module de contrôle (18), et émettant ce code lorsqu'il est soumis à un champ HF.

2. Système selon la revendication 1, caractérisé en ce que les moyens d'interrogation à distance sont situés dans une zone d'entrée d'un couloir (19) de circulation unidirectionnelle du couple personne/objet.

3. Système selon la revendication 1, caractérisé en ce qu'il comprend des moyens de blocage du couple personne/objet (13) situés dans une zone dudit couloir (19) de circulation unidirectionnelle située en aval de la zone d'entrée.

4. Système selon la revendication 1, caractérisé en ce qu'il comprend des moyens de signalisation (21, 22, 23) permettant éventuellement de visualiser le résultat de la comparaison par l'opérateur de surveillance.

5. Système selon la revendication 1, caractérisé en ce qu'il est transparent pour les couples objet/personne non protégés et pour les couples vérifiés bons.

6. Système selon la revendication 1, caractérisé en ce que les moyens d'interrogation à distance sont des moyens d'interrogation par fréquence HF, de quelques centaines de Mhz à plusieurs GHz.

7. Système selon la revendication 1, caractérisé en ce qu'il comprend :
- un premier module électronique, ou marqueur objet (10) ;
- un second module électronique ou marqueur propriétaire (11) ;
- au moins un poste de contrôle (12) comportant :
• au moins un premier module d'émission-réception (14) relié à au moins une première antenne inférieure (15),
• au moins un second module d'émission-réception (16) relié à au moins une seconde antenne latérale (14) située en hauteur,
• au moins un module de commande (18) relié à ces deux modules d'émission-réception (14 et 16),
• des moyens de signalisation (20) reliés au module de commande (18),
• un dispositif d'arrêt (24), commandé par un module de contrôle (25) en liaison avec le module de commande (18).

8. Système selon la revendication 7, caractérisé en ce qu'il comprend un poste central permettant le télécontrôle pour le choix du mode de fonctionnement et la surveillance des états instantanés des sorties reliées.

9. Système selon la revendication 7, caractérisé en ce qu'un module de commande (18), un premier et le second module d'émission-réception (14 et 16) ainsi qu'une (ou des) antenne(s) latérale(s) (17) sont disposés dans une borne (31, 31') située d'un côté ou de l'autre d'une voie de circulation (19).

10. Système selon la revendication 7, caractérisé en ce qu'un marqueur (10, 11) comprend :
- une antenne (40) et son plan de masse (41) ;
- un circuit HF (42) détecteur avec ou sans amplification suivant décodage ;
- un ASCI (44) effectuant toutes les fonctions logiques (45, 46)) de décodage, mémoire, programmation, séquentiel ;
- un quartz (47) ;
- éventuellement un détecteur sismique (48) pour le marqueur véhicule ;
- une pile (49).

11. Système selon la revendication 10, caractérisé en ce que la communication entre les marqueurs et les moyens HF est effectuée par code Manchester.

12. Système selon la revendication 7, caractérisé en ce qu'il comprend un circuit détecteur de brouillage.

13. Système selon la revendication 12, caractérisé en ce que ce circuit détecteur de brouillage est précédé d'un filtre étroit centré sur la fréquence de la porteuse utilisée.

14. Système selon la revendication 8, caractérisé en ce que un moyen de signalisation peut indiquer le résultat instantané de l'unité de traitement : passage accepté, passage refusé, ou marqueur objet à vérifier.

15. Système selon la revendication 1, caractérisé en ce que l'objet (13) est un véhicule et en ce que chaque voie de passage (19) est une voie de sortie d'un parking.

16. Système selon la revendication 15,
caractérisé en ce qu'il comprend des capteurs de présence/fuite de véhicule sur la zone d'interrogation.

17. Système selon la revendication 15, caractérisé en ce que cette voie de sortie est coudée au moins une fois pour forcer le ralentissement.

18. Système selon la revendication 15, caractérisé en ce que chaque voie de sortie comprend :
- une zone anti-fuite et ralentisseuse (60, 60') ;
- une zone d'interrogation HF (61, 61') ;
- une autre zone ralentisseuse (60, 60') ;
- une zone sanction (62, 62').

19. Système selon la revendication 15, caractérisé en ce qu'il comprend quatre antennes (15, 15' ; 17 et 17') couvrant la zone de passage et garantissant la lecture des codes, deux antennes 17 et 17 étant disposées de part et d'autre de la voie de circulation 19, à environ deux mètres de hauteur, et orientées vers les vitres latérales du véhicule afin de faire pénétrer au mieux le rayonnement dans l'habitacle, les deux autres antennes (15 et 15') étant situées verticalement au ras du sol afin de capter le message d'un capteur situé dessous le véhicule.

20. Système selon la revendication 15, caractérisé en ce qu'il comprend des barrières d'isolement HF.

21. Procédé de surveillance sélective d'objets (13) à protéger contre le vol lors du passage d'un objet à protéger (13) dans une voie de passage, comprenant les étapes suivantes :
- création d'un volume d'interrogation HF limité englobant la totalité de la voie de passage ;
- réception d'au moins un code d'identification « objet » (vi) émis par au moins un marqueur objet ;
- vérification qu'un code d'identification « personne » (pi) émis par un marqueur « personne » est reçu pour chaque code « objet » reçu ;
- transparence si à la réception le (ou les) code(s) « objet » est (sont) validé(s) par un (ou des) code(s) « personne » respectivement appairés, sinon sanction de la détection d'un code « objet » non accompagné du code « personne » appairé ;
caractérisé en ce que chaque module « objet » est caché dans un objet à protéger correspondant au gré du propriétaire ; en ce que chaque module électronique « objet » et « personne », lorsque situé dans le volume d'interrogation HF, émet un code crypté variable ; en ce qu'un module de contrôle, après décryptage de chaque code reçu, vérifie que, correspondant à chaque code « objet », un code « personne » est aussi reçu dans un délai déterminé ; et en ce que l'absence d'un code « personne » correspondant à un code « objet » reçu déclenche la sanction à la fin du délai.

22. Procédé selon la revendication 21, caractérisé en ce qu'il permet le blocage d'un véhicule (13) dans une voie de sortie d'un parking.

23. Procédé selon la revendication 22, caractérisé en ce que :
- quand on ne reçoit plus un code (vi) non encore appairé, au bout d'un temps « délai véhicule », le refus de passage est émis ;
- quand on ne reçoit plus un code (pi) non encore appairé, au bout d'un temps « délai conducteur », un message demandant la vérification du marqueur véhicule est émis.

24. Procédé selon la revendication 22, caractérisé en ce qu'on détecte la présence du véhicule sur la zone d'interrogation.

25. Procédé selon la revendication 24, caractérisé en ce qu'on a les délais suivants :
- délai véhicule = présence du véhicule + 0,5 s ;
- délai conducteur = présence du véhicule + environ 1s ;
- délai « nouveau véhicule» = présence du véhicule + environ 1,5 s.

## Patentansprüche

1. System zur selektiven Überwachung zu schützender Objekte gegen Diebstahl, wobei dieses System sich in einer Durchfahrtsspur befindet und umfasst:
- Fernabfrageinrichtungen elektronischer Module (10, 11), die jeweils einen "Objekt"-Identifikationscode (vi) eines zu schützenden Objekts (13) oder einen "Personen"-Identifikationscode (pi) einer ein zu schützendes Objekt besitzenden Person enthalten, wobei diese Einrichtungen fähig sind, den durch jede von diesen ausgesandten Code zu empfangen und diese Fernabfrageinrichtungen dabei eine Anordnung von Antennen (15, 15', 17, 17') umfassen, die ein begrenztes HF-Abfragvolumen schaffen, das die Gesamtheit der Durchfahrtsspur umfasst und fähig ist, die Gesamtheit der in diesem Abfragvolumen ausgesandten Codes zu empfangen,
- einen Kontrollmodul (18), verbunden mit den genannten Abfrageinrichtungen (14, 15; 14', 15'; 16, 17; 16', 17'), fähig diese ldentifikationscodes zu empfangen und die Paarigkeitsermittlung zwischen den empfangenen Objekt- und Personencodes durchzuführen und auf die Detektion eines nicht von dem paarigen Personencode begleiteten Objektcodes mit Sanktionen bzw. Zwangsmaßnahmen zu reagieren,
**dadurch gekennzeichnet,**
dass jeder Objektmodul in einem entsprechenden, auf Wunsch des Eigentümers zu schützenden Objekt versteckt ist, und dadurch, dass jeder elektronische Objektmodul und Personenmodul ein HF-Markierer ist, der einen verschlüsselten und variablen Binärcode enthält, einmalig bzw. eindeutig gepaart mittels einer Entschlüsselungsverarbeitung durch den Kontrollmodul (18), und der diesen Code aussendet, wenn er einem HF-Feld ausgesetzt ist.

2. System nach Anspruch 1, dadurch gekennzeichnet, dass die Fernabfrageinrichtungen sich in einer Eingangszone eines Einbahnverkehr-Korridors (19) des Person/Objekt-Paares befindet.

3. System nach Anspruch 1, dadurch gekennzeichnet, dass es Blockiereinrichtungen des Person/Objekt-Paares (13) umfasst, die in einer Einbahnverkehrszone des genannten Korridors (19) vorgesehen sind, der sich - in Fahrtrichtung - hinter der Eingangszone befindet.

4. System nach Anspruch 1, dadurch gekennzeichnet, dass Signalisierungseinrichtungen (21, 22, 23) eventuell ermöglichen, das Resultat des Vergleichs durch die Überwachungsperson anzuzeigen.

5. System nach Anspruch 1, dadurch gekennzeichnet, dass es durchlässig ist für die nichtgeschützten Objekt/Person-Paare und für die anstandslos überprüften Paare.

6. System nach Anspruch 1, dadurch gekennzeichnet, dass die Fernabfrageinrichtungen HF-Abfrageinrichtungen sind, deren Frequenz von einigen hundert MHz bis zu mehreren GHz geht.

7. System nach Anspruch 1, dadurch gekennzeichnet, dass es umfasst:
- einen ersten elektronischen Modul oder Objektmarkierer (10);
- einen zweiten elektronischen Modul oder Eigentümer-Markierer (11);
- wenigstens eine Kontrollstation (12), umfassend:
˙ wenigstens einen ersten Sende-Empfangsmodul (14), verbunden mit wenigstens einer ersten, unteren Antenne (15),
˙ wenigstens einen zweiten Sende-Empfangsmodul (16), verbunden mit wenigstens
˙ einer zweiten, seitlichen Antenne (14), oben angeordnet,
˙ wenigstens einen Steuermodul (18), verbunden mit diesen beiden Sende-Empfangsmodulen (14 und 16),
˙ Sigalisierungseinrichtungen (20), verbunden mit dem Steuermodul (18),
˙ eine Stoppeinrichtung (24 ), gesteuert durch einen Kontrollmodul (25) in Verbindung mit dem Steuermodul (18).

8. System nach Anspruch 7, dadurch gekennzeichnet, dass es eine Zentralstation umfasst, die die Fernkontrolle für die Wahl der Betriebsart und die Überwachung der momentanen Zustände der verbundenen Ausgänge ermöglicht.

9. System nach Anspruch 7, dadurch gekennzeichnet, dass ein Steuermodul (18), ein erster und ein zweiter Sende-Empfangsmodul (14 und 16) sowie eine Seitenantenne oder Seitenantennen (17) in einem Pfosten (31, 31') angeordnet sind, der sich auf der einen oder anderen Seite einer Durchfahrtsspur (19) befindet.

10. System nach Anspruch 7, dadurch gekennzeichnet, dass ein Markierer (10, 11) umfasst:
- eine Antenne (40) und ihre Massenebene (41);
- eine HF-Detektionsschaltung (42) mit oder ohne Verstärkung, je nach Decodierung;
- eine ASIC-Schaltung (44), die sequentiell alle logischen Decodier-, Speicher- und Programmierfunktionen (45, 46) ausführt;
- einen Quarz (47);
- eventuell einen seismischen Detektor (48) für den Fahrzeug-Markierer;
- eine Batterie (49).

11. System nach Anspruch 10, dadurch gekennzeichnet, dass die Kommunikation zwischen den Markierern und den HF-Einrichtungen mittels Manchester-Code erfolgt.

12. System nach Anspruch 7, dadurch gekennzeichnet, dass es eine Störgeräusch-Detektionsschaltung umfasst.

13. System nach Anspruch 12, dadurch gekennzeichnet, dass dieser Störgeräusch-Detektionsschaltung ein schmales Filter vorgeschaltet ist, zentriert auf die Frequenz der benutzten Trägerwelle.

14. System nach Anspruch 8, dadurch gekennzeichnet, dass eine Signalisierungseinrichtung das momentane Resultat der Verarbeitungseinheit anzeigen kann: Durchfahrtsgenehmigung, Durchfahrtsverweigerung oder zu verifizierender Objektmarkierer.

15. System nach Anspruch 1, dadurch gekennzeichnet, dass das Objekt (13) ein Fahrzeug ist, und dadurch, dass jede Durchfahrtsspur (19) eine Ausfahrt-Spur aus einem Parkhaus bzw. Parkplatz ist.

16. System nach Anspruch 15, dadurch gekennzeichnet, dass es Fahrzeug-Präsenz/Flucht-Sensoren in der Abfragzone umfasst.

17. System nach Anspruch 15, dadurch gekennzeichnet, dass diese Ausfahrt-Spur wenigstens eine Schwelle aufweist, um die Verlangsamung zu erzwingen.

18. System nach Anspruch 15, dadurch gekennzeichnet, dass jede Ausfahrt-Spur umfasst:
- eine Antiflucht- und Verlangsamungszone (60, 60');
- eine HF-Abfragzone (61, 61');
- eine Sanktions- bzw. Zwangsmaßnahmenzone (62, 62').

19. System nach Anspruch 15, dadurch gekennzeichnet, dass es vier Antennen (15, 15'; 17, 17') umfasst, die die Durchfahrtszone abdecken und das Lesen der Codes sicherstellen, wobei zwei Antennen (17 und 17') beiderseits der Fahrspur (19) in ungefähr 2 Meter Höhe angeordnet und auf die Seitenfenster des Fahrzeugs gerichtet sind, um die Strahlung bestmöglich ins Innere des Karosseriegehäuses eindringen zu lassen, und die beiden anderen Antennen (15 und 15') sich unmittelbar vertikal über dem Boden befinden, um die Nachricht eines unter dem Fahrzeug befindlichen Sensors aufzufangen.

20. System nach Anspruch 15, dadurch gekennzeichnet, dass es HF-Isolationsbarrieren umfasst.

21. Verfahren zur selektiven Diebstahl-Überwachung zu schützender Objekte (13), wenn eines der zu schützenden Objekte (13) eine Durchfahrtsspur durchfährt, wobei dieses Verfahren die folgenden Schritte umfasst:
- Schaffung eines begrenzten HF-Abfragvolumens, das die Gesamtheit der Durchfahrtsspur einschließt;
- Empfang wenigstens eines Objekt-ldentifikationscodes (vi), ausgesandt durch wenigstens einen Objektmarkierer;
- Verifizierung, dass für jeden empfangenen Objektcode ein Personen-Identifikationscode (pi), ausgesandt durch einen Personenmarkierer, empfangen wird;
- Transparenz ob beim Empfang der (oder die) Objektcode(s) jeweils validiert wird (werden) durch einen (oder zwei bzw. mehrere) paarige Personencodes, andernfalls Sanktion der Detektion eines nicht von dem paarigen Personencode begleiteten Objektcodes;
**dadurch gekennzeichnet,**
dass jeder Objektmodul in einem entsprechenden, auf Wunsch des Eigentümers zu schützenden Objekt versteckt ist, und dadurch, dass jeder elektronische Objektmodul und Personenmodul einen variablen verschlüsselten Code aussendet, dadurch dass ein Kontrollmodul nach Entschlüsselung jedes empfangenen Codes verifiziert, dass für jeden Objektcode innerhalb eines festgelegten Zeitraums auch ein entsprechender Personencode empfangen wird, und dadurch ,dass das Ausbleiben eines einem empfangenen Objektcode entsprechenden Personencodes am Ende der Frist die Sanktion bzw. Zwangsmaßnahme auslöst.

22. Verfahren nach Anspruch 21, dadurch gekennzeichnet, dass es die Blockierung eines Fahrzeugs (13) in der Ausfahrt-Spur eines Parkhauses bzw. Parkplatzes ermöglicht.

23. Verfahren nach Anspruch 22, dadurch gekennzeichnet, dass:
- wenn man einen noch ungepaarten Code (vi) am Ende einer "Fahrzeugverzögerung"-Frist nicht mehr empfängt, die Durchfahrtverweigerung ausgesandt wird;
- wenn man einen noch ungepaarten Code (pi) am Ende einer "Fahrer"-Frist nicht mehr empfängt, eine Botschaft ausgesandt wird, die die Verifizierung des Fahrzeugmarkierers verlangt.

24. Verfahren nach Anspruch 22, dadurch gekennzeichnet, dass man das Vorhandensein des Fahrzeugs in der Abfragzone detektiert.

25. Verfahren nach Anspruch 24, dadurch gekennzeichnet, dass man die folgenden Fristen hat:
- Frist Fahrzeug = Fahrzeugpräsenz + 0,5 s;
- Frist Fahrer = Fahrzeugpräsenz + ungefähr 1 s;
- Frist "neues Fahrzeug" = Fahrzeugpräsenz + 1,5 s.

## Claims

1. System for the selective monitoring of objects to be protected against theft, said system being located in a passage route and comprises:
- means for the remote interrogation of electronic modules (10, 11) respectively containing an "object" identification code (vi) with respect to an object to be protected (13), or a "person" identification code (pi) with respect to a person in possession of an object to be protected, said means being able to receive the code transmitted by each of them, the remote interrogation means comprising a set of antennas (15, 15', 17, 17') creating a limited HF interrogation volume covering the entire passage route and able to receive all the codes transmitted in said interrogation volume;
- a control module (18) connected to said remote interrogation means (14, 15; 14', 15'; 16, 17; 16', 17') able to receive said identification codes and carrying out a matching search between the "object" and "person" codes received and approving the detection of an "object" code not accompanied by the matched "person" code;
characterized in that each "object" module is hidden in an object to be protected in accordance with the wishes of the owner; and in that each "object" and "person" electronic module is a HF marker containing a variable, encrypted binary code matched by a decrypting treatment carried out in unique manner by means of the control module (18) and transmitting said code when subject to a HF field.

2. System according to claim 1, characterized in that the remote interrogation means are located in an entry zone of a unidirectional travel lane (19) of the person/object pair.

3. System according to claim 1, characterized in that it comprises means for blocking the person/object pair (13) located in an area of said unidirectional travel lane (19) located downstream of the entry zone.

4. System according to claim 1, characterized in that it comprises signalling means (21, 22, 23) optionally making it possible to display the result of the comparison by the monitoring operator.

5. System according to claim 1, characterized in that it is transparent for unprotected object/person pairs and for pairs verified as being satisfactory.

6. System according to claim 1, characterized in that the remote interrogation means are HF frequency interrogation means of a few hundred Mhz to several GHz.

7. System according to claim 1, characterized in that it comprises:
- a first electronic module or object marker (10),
- a second electronic module or owner marker (11),
- at least one control station (12) having:
- at least one first transmission-reception module (14) connected to at least one first lower antenna (15),
- at least one second transmission-reception module (16) connected to at least one second high, lateral antenna (14),
- at least one control module (18) connected to said two transmission-reception modules (14, 16),
- signalling means (20) connected to the control module (18),
- a stop device (24) controlled by a control module (25) in conjunction with the control module (18).

8. System according to claim 7, characterized in that it comprises a central station permitting remote control for the choice of the operating and monitoring mode for the instantaneous states of the linked exits.

9. System according to claim 7, characterized in that a control module (18), a first and second transmission-reception modules (14, 16), as well as the lateral antenna or antennas (17) are located in a terminal (31, 31') on one or other side of the travel lane (19).

10. System according to claim 7, characterized in that a marker (10, 11) comprises:
- an antenna (40) and its earth plane (41),
- a detecting HF circuit (42) with or without amplification as a function of decoding,
- an ASCI (44) carrying out all the logic (45, 46) decoding, memory, programming and sequential functions,
- a crystal (47),
- optionally a seismic detector (48) for the vehicle marker,
- a battery (49).

11. System according to claim 10, characterized in that communication between the markers and the HF means takes place by Manchester code.

12. System according to claim 7, characterized in that it comprises an interference detecting circuit.

13. System according to claim 12, characterized in that the interference detecting circuit is preceded by a narrow filter centred on the frequency of the carrier used.

14. System according to claim 8, characterized in that a signalling means can indicate the instantaneous result of the processing unit: passage accepted, passage refused, or object marker to be checked.

15. System according to claim 1, characterized in that the object (13) is a vehicle and in that the passage lane (19) is an exit lane of a car park.

16. System according to claim 15, characterized in that it comprises vehicle presence/moving away sensors on the interrogation zone.

17. System according to claim 15, characterized in that said exit lane is curved at least once in order to make slowing down necessary.

18. System according to claim 15, characterized in that each exit lane comprises:
- an anti-moving away and slowing down zone (60, 60'),
- a HF interrogation zone (61, 61'),
- another slowing down zone (60, 60'),
- an approval zone (62, 62').

19. System according to claim 15, characterized in that it comprises four antennas (15, 15'; 17, 17') covering the passage zone and guaranteeing the reading of the codes, two antennas (17, 17') being placed on either of the travel lane (19) at a height of approximately 2 metres and oriented towards the vehicle side windows in order to bring about a maximum penetration of the radiation into the vehicle interior, the other two antennas (15, 15') being positioned vertically at ground level in order to intercept the message of a sensor located beneath the vehicle.

20. System according to claim 15, characterized in that it comprises HF insulation barriers.

21. Process for the selective monitoring of objects (13) to be protected against theft during the passage of an object to be protected (13) in a passage lane, comprising the following stages:
- creating a limited HF interrogation volume covering the entire passage lane,
- reception of at least one "object" identification code (vi) transmitted by at least one object marker,
- checking a "person" identification code (pi) transmitted by a "person" marker for each "object" code received,
- transparency if on reception the "object" code or codes are validated by a respectively matched "person" code or codes, if not approval is given for the detection of an "object" code not accompanied by a matched "person" code,
characterized in that each "object" module is hidden in an object to be protected in accordance with the wishes of the owner, in that each "object" and "person" electronic module, when located in the HF interrogation volume, transmits a variable encrypted code, in that a control module, following the decrypting of each code received, checks that, corresponding to each "object" code, a "person" code is also received within a given time lag and in that the absence of a "person" code corresponding to an "object" code received triggers approval at the end of the time lag.

22. Process according to claim 21, characterized in that it permits the blocking of a vehicle (13) in a car park exit lane.

23. Process according to claim 22, characterized in that:
- when a not yet matched code (vi) is no longer received at the end of a "vehicle time lag" period, passage refusal is transmitted,
- when a not yet matched code (pi) is no longer received at the end of a "driver time lag" period, a message requesting verification of the vehicle marker is transmitted.

24. Process according to claim 22, characterized in that the presence of the vehicle is detected on the interrogation zone.

25. Process according to claim 24, characterized in that the following time lags exist:
- vehicle time lag = presence of vehicle + 0.5 s,
- driver time lag = presence of vehicle + approx. 1 s,
- "new vehicle" time lag = presence of vehicle + approx. 1.5 s.
